# EUROPEAN PATENT SPECIFICATION

(11) **EP 2 133 511 B1**
(45) Date of publication and mention of the grant of the patent: **27.03.2013**
(21) Application number: 08425411.9
(22) Date of filing: 10.06.2008
(51) Int. Cl.: F01C 1/02, F02B 53/00

(54) **Internal combustion scroll engine**
Verbrennungsspiralmotor
Moteur à volutes à combustion interne

(43) Date of publication of application: 16.12.2009
(73) Proprietor: Energeticamente Rinnovabili SRL, 10141 Torino (IT)
(72) Inventor: Fiori, Ascanio, 10129 Torino (IT); Nespoli, Luca, 10137 Torino (IT)
(74) Representative: Robba, Pierpaolo

(56) References cited:
- CN-A- 101 144 416
- DE-A1- 3 141 525
- JP-A- 59 051 130
- JP-A- 60 212 683
- US-A- 801 182
- US-A- 3 011 694
- US-A- 4 677 949

## Description

The present invention concerns a rotary engine as defined in the preamble of claim 1. Such an engine is known e.g. from any of CN-A-101144416 or JP-A-59051130.

More precisely, the invention concerns a scroll-type rotary internal combustion (IC) engine.

In the field of scroll-type rotary machines, scroll compressors are known, exploiting two interconnected scroll-type rotors for compressing liquid or gaseous fluids. The rotor geometry may be involved, of the Archimedean spiral or other type. Generally, one rotor is stationary and the other one eccentrically orbits without rotating, thereby causing pumping of fluid pockets along the channel defined between the spirals.

US 801,182 discloses a reversible rotary expander with spiral geometry, which may be operated by an elastic fluid under pressure, or may be used as a pump for pumping a fluid. According to the teaching of this document, the expander comprises two parallel plates movable relative to each other and having each a corresponding spiral wall extending perpendicularly to the plate surface and developing on the plate like a band.

The spirals are sealingly engaged in each other in correspondence of a set of generating lines so as to define, with the respective plates they are associated with, a number of separate chambers the volume of which increases as the sealing regions between the spirals move from the starting point of the spiral development towards the end thereof.

The displacement of the sealing regions, resulting in an orbital movement of translation of one of the spiral walls relative to the other, is caused by the expansion of an elastic fluid contained in the chambers, which fluid is introduced at the spiral centre and is exhausted at the periphery.

The machine formed in that manner is reversible, in that it can also be used as a pump for compressing an elastic fluid.

Another example of reversible machine based on the same principle of a scroll-type rotor is disclosed in US 3,817,664.

The principle disclosed in the above documents has been till now exploited especially in the field of compressors for air conditioning systems.

Examples of compressors exploiting the above operation principle of a rotary or scroll-type compressor are disclosed in US 3,884,599 and US 6,579,080.

Documentary evidence is also provided on some attempts to manufacture internal combustion engines based on the principle of the scroll-type rotary engine.

US 5,094,205 discloses a scroll-type rotary internal combustion engine comprising a first spiral section acting as a compressor associated with a second spiral section acting as an expander. An ignition spark plug is provided near the innermost portion of the second spiral section to cause the controlled ignition of the mixture and the consequent combustion and expansion of the air (oxygen) - fuel mixture.

A drawback of such a construction is that a significant amount of the work produced by the machine in the expander section is used for compressing the combustible mixture in the first spiral section (compressor): Since the compressor is to attain a pressure exceeding that attained by the mixture in the exhaust phase, the overall useful work of the machine will tend to zero. In particular, the geometry of the combustion chamber and the cyclical movement of the disc valve located between the delivery of the first section (compressor) and the innermost portion of the spirals in the second section (expander) prevent the combusted gases from being completely exhausted through the expander before the phase of introduction of fresh combustible mixture, which takes place at each complete rotation of the shaft. Consequently, when fresh combustible mixture is introduced, the pressure in the expansion chamber defined between the spirals in the second section will generally exceed the nominal working pressure of the compression section, thus entailing a loss of efficiency in the overall operation cycle of the machine.

A second and a third examples of scroll-type rotary internal combustion engines, suffering however of the same drawbacks, are disclosed in US 4,677,949 and US 5,293,850.

A forth example of scroll internal combustion engine still suffering of the same drawbacks is disclosed in JP 59 051130. This kind of engine comprises first moving and stationary spirals forming a compression chamber which performs the compressive action and second moving and stationary spirals forming expansion chamber which performs the expansive action. The mixture of fuel and air is sucked from a suction port into a compressor sucking space and then fed by the first spirals into the compression chamber. Thereafter, the mixture is exploded and burnt by an ignition plug in an enclosed chamber which is defined between the second spirals to revolve a main shaft.

A fifth example of scroll internal combustion engine is discloses in CN 101 144 416 which refers to a scroll type internal combustion engine comprising a moving scroll plate, a static scroll plate, an ignition device, an air intake system, an output shaft and an auxiliary device, wherein, the moving scroll plate is positioned in the static scroll plate and one work chamber is defined between the spirals of the scroll plates for fuel injection and for mixture and combustion, said work chamber being bounded by the discs and the spirals.

Thus, it is a first object of the invention to provide a scroll-type rotary internal combustion engine that does not suffer from the above drawbacks.

It is a second object of the invention to provide an engine of the above type in which the operation cycle is more efficient than that of previously known engines of the same type.

It is a further, but not the last, object of the present invention to provide an engine of the above type that is cheap to implement and is competitive, in terms of manufacture, operation and maintenance costs, with respect to conventional internal combustion engines associated with current generators.

The above and other objects are achieved by the scroll-type rotary internal combustion engine as claimed in the appended claims.

Advantageously, according to the invention, ignition and combustion of the combustible mixture take place in chambers confined within the volume portions defined between both spirals, of which preferably only one is orbiting and the other is stationary. Thus, mixture ignition and combustion take place within a chamber confined by the spirals of the expander element, instead of taking place in the region upstream and outside such spirals, as taught by the prior art. Such a chamber in which the mixture and gas mass is contained evolves along the spiral path and increases in volume. In that manner, the mixture entering the expander can be at a pressure close to atmospheric pressure and it will not suffer from overheating and overpressure due to its compression.

Advantageously, according to the invention, a combustion chamber for the combustible mixture is defined between two sealingly engaged generating lines of the spirals. Such an arrangement provides a higher efficiency than configurations employed till now.

Moreover, such an arrangement allows introducing the combustible mixture even at a pressure close to atmospheric pressure, since said chamber is completely evacuated when new fresh combustible mixture is introduced.

Moreover, advantageously, according to the invention, the ignition of the mixture and of the partly combusted gases can be repeated several times along the path defined between the expander portion with the smallest radius (intake) and the portion with the greatest radius (exhaust), by using conventional ignition means, such as ignition spark plugs, which may even be more than one and are located on the stationary spiral along the expansion path of the mixture and the combusted gases.

In the alternative, always according to the invention, ignition takes place at multiple points by means of a novel ignition system that uses the stationary spiral as an anode and the moving spiral as a cathode, and that includes, along the gas expansion path, conductive plates (for instance platinum coated) formed on both spirals at facing positions. The values of the conductivity in the plate region are higher than in the remaining surface of the spirals, for instance thanks to a homogeneous surface treatment. By means of an external device generating electric pulses with suitable voltage, amperage and frequency in synchronism with the rotation of the orbiting element, the mixture ignition at multiple points is obtained.

Advantageously, according to the invention, fuel injection into the comburent mixture take place by means of injectors located on the stationary portion of the scroll rotor, so as to adjust the combustible mixture composition to the stoichiometric ratio and/or the optimum operating conditions of the engine. Adjustment of the injectors may be controlled by electromechanical devices, such as temperature and/or rotation speed detectors, and also by feeding back a signal from a lambda probe located near the combusted gas exhaust.

Thanks to the above features, a complete combustion of the mixture, with an optimum combustion efficiency, is achieved. Moreover, the combusted gas pressure along the whole of the expansion path is converted into rotational mechanical energy and it attains values close to atmospheric pressure before the exhaust, thereby producing a useful expansion work that is optimum from the thermodynamic standpoint.

Advantageously, according to the invention, it is possible to obtain a continuous cycle rotary engine that, if compared with the conventional reciprocating internal combustion engines, has an optimum expected energetic efficiency and reduced noise and that can operate with reduced maintenance, reduced operating costs and improved duration and reliability.

Advantageously, according to the invention, various kinds of fuel, in particular ethanol and methane, can be used.

According to the invention, the provision of a region of ignition and combustion of the combustible mixture that is radially located towards outermost diameters with respect to the applications of scroll-type rotary compressors of the prior art, allows obtaining a greater torque thanks to the greater average arm of the orbiting spiral on which the combusted gas pressure acts during the expansion phase.

The provision of a pair of rotors arranged side by side and axially opposite on a same shaft allows obtaining an optimal angular mass arrangement, thereby balancing the system formed by the drive shaft, the orbiting masses and the loads exerted by the combusted gases under pressure and obtaining a useful torque at the shaft that is significantly more regular and constant than in the conventional reciprocating engines.

Advantageously, according to the invention, the heat of the combusted gas and the latent heat of steam condensation, generated by the motors, can be taken through a gas-water exchanger in order to be used for instance in heating installations or in installations for production of hot water for sanitary use.

The invention can be applied in particular to manufacture of small-size machines for co-generation of electric power and heat, which machines can be built for instance by associating the rotary engine of the invention with an electric generator equipped with an inverter, for sending the produced electric power to the mains. As to the produced thermal energy, the expected yields are similar to those of condensation boilers.

Some preferred embodiments of the invention will be described hereinafter by way of non-limiting examples, with reference to the accompanying drawings, in which:
- Fig. 1 is a diagrammatical cross-sectional view of a rotor of the engine according to the invention;
- Fig. 2 is a cross-sectional side view of a constructional detail of the engine shown in Fig. 1;
- Figs. 3 and 4 show a first arrangement of the injector and the ignition spark plug, respectively, in the engine shown in Fig. 1;
- Fig. 5 shows a second arrangement of the injector and the ignition spark plug in the engine shown in Fig. 1;
- Fig. 6 is a diagrammatical view of a variant embodiment of the ignition system in the engine shown in Fig. 1;
- Figs. 7 to 12 are as many diagrammatical views of the operation cycle of the engine according to the invention;
- Fig. 13 is a graph of the pressure in a chamber representative of the operation cycle of the engine according to the invention;
- Fig. 14 is a graph of the pressure in the six chambers, during the operation cycle of the engine according to the invention.

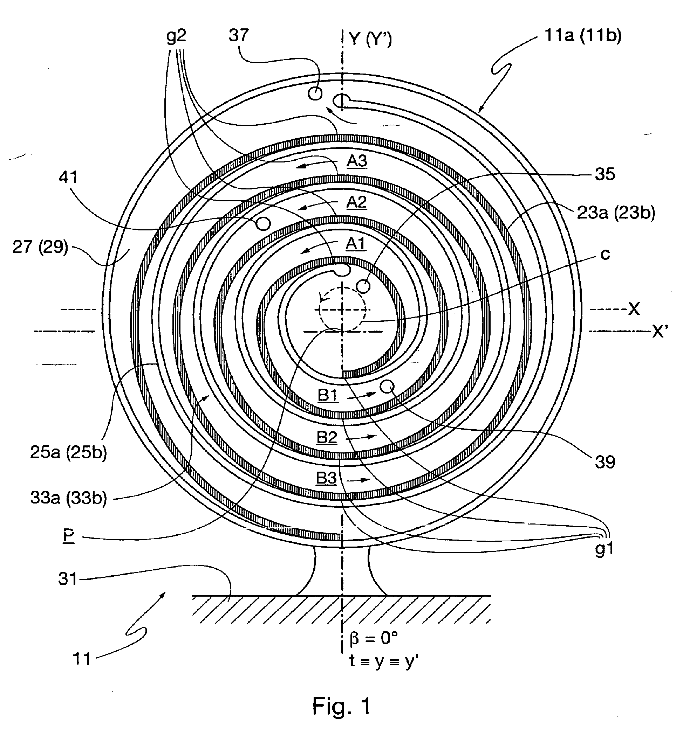

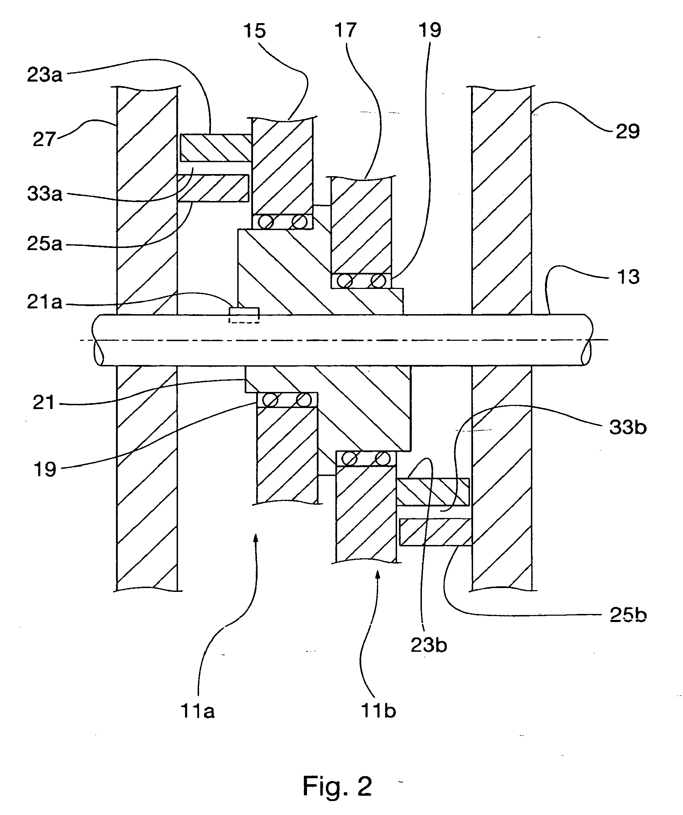

Referring to Figs. 1 and 2, there is shown a preferred embodiment of the invention, in which rotary engine 11 is equipped with two rotor assemblies denoted 11a and 11b, respectively.

It is clear that other arrangements, comprising one or multiple rotor assemblies, are possible, depending on the application of the engine.

Rotary engine 11 further includes a shaft 13, supported by corresponding rotatable bearings (not shown), for transmitting the motion generated by the rotation of a pair of orbiting discs 15, 17, which are mounted eccentric, parallel and diametrically opposite on said shaft 13, so as to form in their whole a substantially balanced rotating mass. The orbiting movement of orbiting discs 15 and 17 is obtained through the interposition of bearings 19 on a coupling flange 21, secured to shaft 13 by a peg 21a.

Advantageously, said drive shaft 13 can be associated with a power (torque) takeoff or the like, with which a utilisation apparatus, for instance an electric current generator, can be in turn associated.

Each orbiting disc 15 and 17 is equipped with a corresponding orbiting spiral 23a and 23b, respectively, and defines with such a spiral the corresponding spiral rotor of the scroll-type rotary engine according to the invention.

According to the invention, each orbiting spiral 23a, 23b cooperates with a corresponding stationary spiral 25a, 25b associated with a corresponding stationary disc 27, 29, secured to a basement 31 and defining with said stationary spiral 25a, 25b the stator of rotor assembly 11a, 11b.

From a constructional standpoint, orbiting spiral 23a, 23b and stationary spiral 25a, 25b will form an integral body with the respective disc, since it is preferably formed by chipping mechanical machining from a solid metal disc.

Each orbiting spiral 23a, 23b is interconnected with a corresponding stationary spiral 25a, 25b, which defines, jointly with its associated disc 27, 29, a corresponding spiral channel 33a, 33b where the respective orbiting spiral 23a, 23b moves.

In each rotor assembly 11a, 11b, respective sealing regions are defined between orbiting spiral 23a, 23b and stationary spiral 25a, 25b in correspondence of the generating lines denoted by reference symbols g1 and g2 in the Figures. During the orbiting movement of orbiting spiral 23a, 23b, said generating lines g1, g2 move along the arc-shaped path defined by the corresponding stationary spiral 25a, 25b.

By convention, and for easiness of description, the axis passing through said generating lines gl, g2 is identified by reference symbol t in the Figures, and the angle defined by said axis t and stationary vertical axis Y of stationary spiral 25a, 25b is identified by reference symbol β.

In the exemplary configuration shown in Fig. 1, two diametrically opposite sets of work chambers are defined inside channel 33a, 33b between said generating lines g1, g2 in correspondence of which the sealing is obtained, each set comprising three chambers identified by reference symbols A1, A2, A3 and B1, B2, B3, respectively.

In the illustrated example, the orbiting and stationary spirals are four-coil Archimedean spirals, which therefore define the above-mentioned sets of work chamber, whereby six chambers are formed in the whole.

The six chambers A1, A2, A3 and B1, B2, B3 are axially bounded by the seals provided between the spirals and the discs, and are angularly defined by the seals defined along generating lines g1, g2 of the spirals. An inlet port 35 and an outlet port 37 are further provided along spiral channel 33a, 33b, for the inlet of air at the beginning of the operation cycle of the engine and for exhausting the combusted gases at the end of said cycle, respectively.

A fuel injection region, equipped with an injector 39, and an ignition and combustion region, equipped with an ignition spark plug 41, are moreover defined along said spiral channel 33a, 33b, said regions being preferably diametrically opposite.

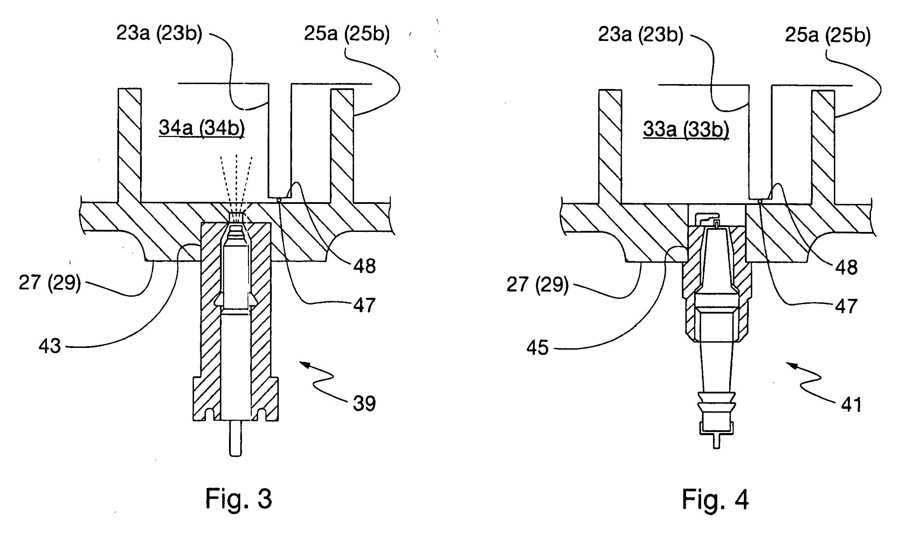

Turning now to Figs. 3 and 4, there is shown the arrangement of injector 39 and ignition spark plug 41, respectively, according to a first embodiment of the invention.

In the arrangement shown in Figs. 3 and 4, stationary disc 27, 29 having associated therewith stationary spiral 25a, 25b has a first axial hole 43 where a corresponding threaded seat for an injector 39 is formed, and a second axial hole 45 where a corresponding threaded seat for an ignition spark plug 41 is formed.

Still referring to Figs. 3 and 4, there is also shown a first arrangement of the seal between moving spiral 23a, 23b and the plane surface of stationary disc 27, 29. Said seal is formed by a sliding gasket 47 associated with the surface of edge 48 of moving spiral 23a, 23b for instance by fitting into a corresponding seat of that surface. Said sealing gasket or insert 47 may be formed for instance of a solid lubricating material resisting to high temperatures, for instance a granite polymer.

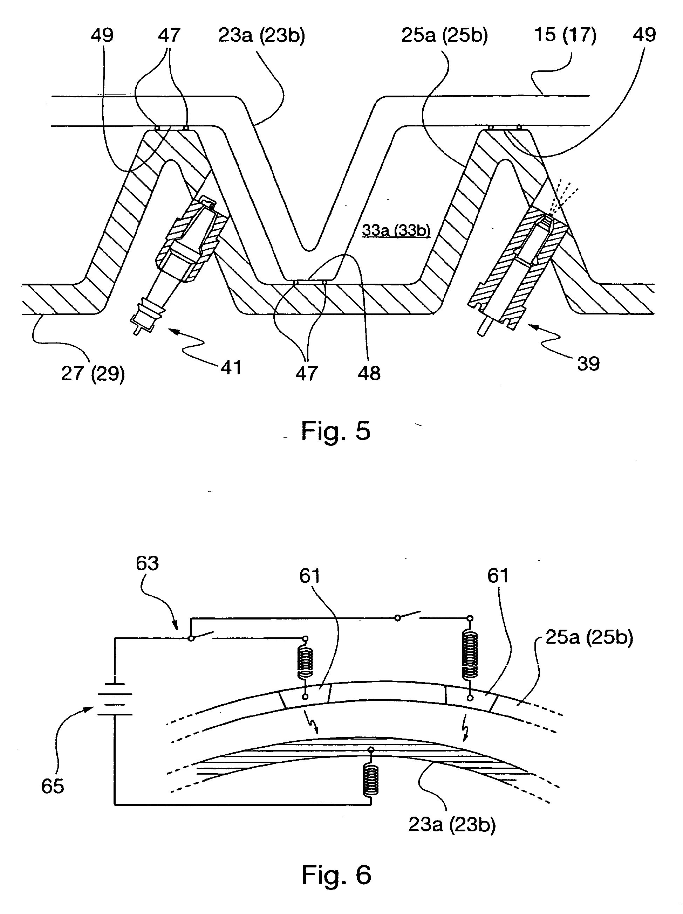

Turning now to Fig. 5, there is shown the arrangement of injector 39 and spark plug 41 in a second embodiment of the invention, where the wall defining orbiting spirals 23a, 23b and stationary spirals 25a, 25b has a substantially frusto-conical cross-sectional shape.

Advantageously, according to such an arrangement, a sliding seal, a double seal in the illustrated example, can be obtained, where sealing gaskets or inserts 47 are inserted into seats provided both on edge 49 of the stationary spiral and on edge 48 of the moving spiral, so as to prevent the gas expanding inside spiral channel 33a, 33b from radially transiting along the spirals, with a resulting degradation of the engine performance.

Moreover, advantageously, thanks to the frusto-conical cross-sectional shape of the spirals, spark plug 41 and injector 39 can be located so that said gaskets 47 do not interfere with the holes in which said spark plug and said injector are housed. Thanks to such a feature, localised leaks between contiguous chambers are avoided.

Turning to Fig. 6, there is shown a variant embodiment of the ignition system of the engine shown in Fig. 1, using stationary spiral 25a, 25b as an anode and orbiting spiral 23a, 23b as a cathode.

To this end, stationary spiral 25a, 25b is advantageously equipped with at least one conducting plate 61, obtained for instance by means of a platinum coating or of an electrode inserted into the spiral, which increases conductivity with respect to the remaining spiral surface.

A device generating voltage pulses 63, which is synchronised with the movement of the orbiting spiral, is supplied for instance by vehicle battery 65 and is connected to plates 61 and the orbiting spiral, causes mixture ignition within the corresponding chamber, which is located at the ignition region where said plates 61 are provided.

Advantageously, according to the invention, a plurality of ignition plates 61 may be provided, thereby obtaining a sequence of consecutive ignitions at closely spaced time intervals, thereby favouring the complete mixture combustion.

Turning back to Fig. 1, there is shown the arrangement of orbiting spiral 23a, 23b in the configuration that, for easiness of the description, will be considered as the starting configuration of the operation cycle of the engine.

In such a starting configuration, centre P of orbiting spiral 23a, 23b or, if preferred, of the corresponding orbiting disc 15, 17 the spiral is associated with, is at its starting position (bottom point in the Figure) along the circular path defined by circumference C. Such a path C is shown as a dashed line with radius K corresponding to the eccentricity of flange 21 on which orbiting discs 15, 17 are mounted. The arrow along line C denotes the rotation direction of shaft 13 and the arrows along channel 33a, 33b denote the rotation direction of chambers A1, A2, A3 and B1, B2, B3 from intake port 35 to exhaust port 37.

Diameter 2K of path C corresponds moreover with the maximum extent of the displacement of the orbiting spiral relative to the stationary spiral along axes X and Y, as it will become apparent from the following description.

Said diameter 2K, added to the wall thickness of the stationary spiral (by convention, identical to that of the moving spiral), corresponds moreover to the so-called pitch of the Archimedean spiral forming the rotor in the illustrated example.

In such a configuration, according to the orientation of Fig. 1, vertical axes Y and Y' of the stationary and orbiting spirals, respectively, coincide, whereas horizontal axis X' of the orbiting spiral is located at a distance K below axis X of the stationary spiral.

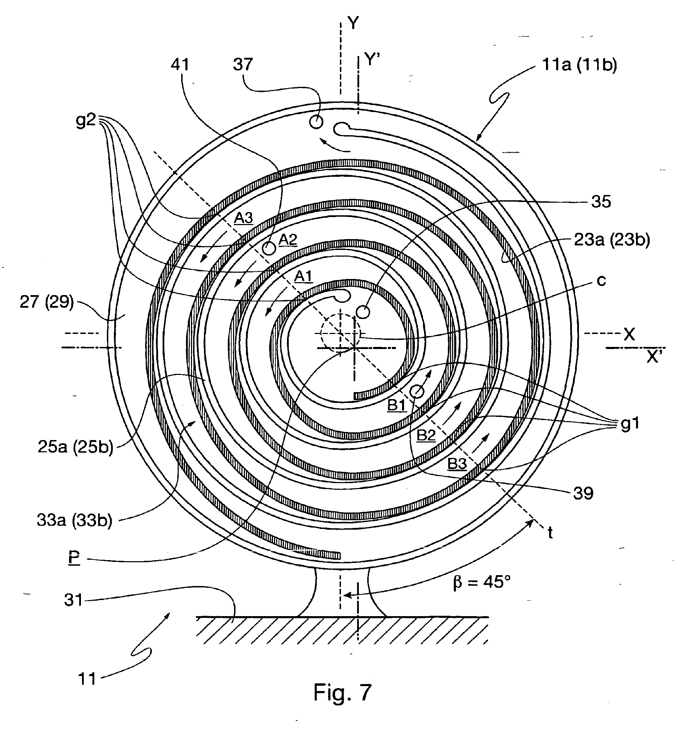

Turning to Fig. 7, there is shown the configuration in which chamber B1 is substantially aligned in correspondence of injector 39 for fuel introduction into the same chamber.

In accordance with the preferred embodiment of the invention, chamber B1 contains air at a pressure close to atmospheric pressure, with which fuel, for instance ethanol or methane, is mixed through injector 39.

In the alternative, however, a phase of compression of the air introduced into the chamber, for instance by means of a scroll-type compressor associated with or external to engine 11, can be envisaged.

Still with reference to the configuration shown in Fig. 7, centre P of orbiting spiral 23a, 23b has run over an arc β = 45° along the circular path defined by circumference C.

In such a configuration, according to the orientation of Fig. 7, vertical axis Y' of orbiting spiral 23a, 23b is shifted to the right relative to vertical axis Y of the stationary spiral by an amount K/√2, and horizontal axis X' of the orbiting spiral is located at a distance K/√2 below axis X of the stationary spiral.

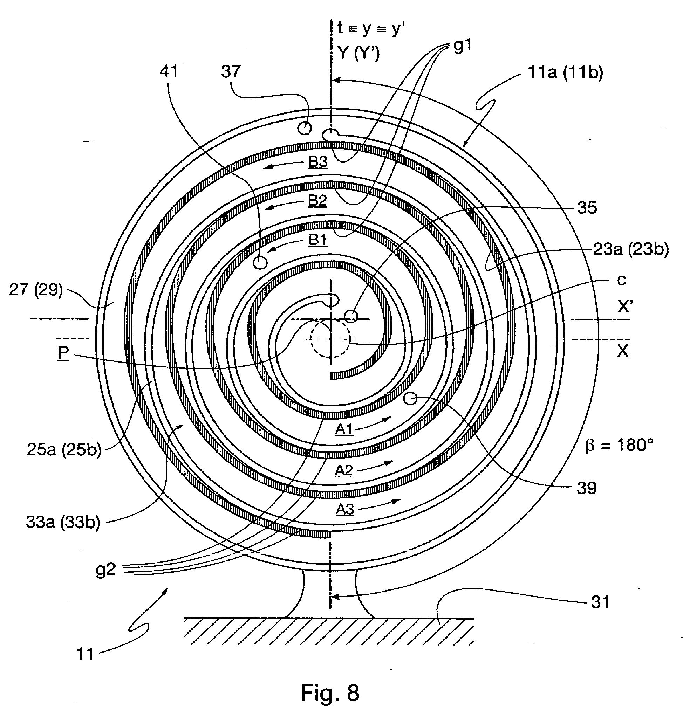

Considering now Fig. 8, there is shown the configuration in which chamber B1 approaches ignition spark plug 41 intended to cause ignition and combustion of the fuel - air mixture inside the corresponding chamber.

In such a configuration shown in Fig. 8, centre P of the moving spiral is at the top point along the circular path defined by circumference C, and angle β between axis t and vertical axis Y of the stationary spiral is 180°.

In such a configuration, according to the orientation of Fig. 8, vertical axis Y' of the orbiting spiral coincides with vertical axis Y of the stationary spiral, and horizontal axis X' of the orbiting spiral is located at a distance K above axis X of the stationary spiral.

According to a preferred embodiment of the invention, ignition and combustion of the mixture take place substantially in correspondence of the configuration taken when centre P has moved by further 45° along circumference C.

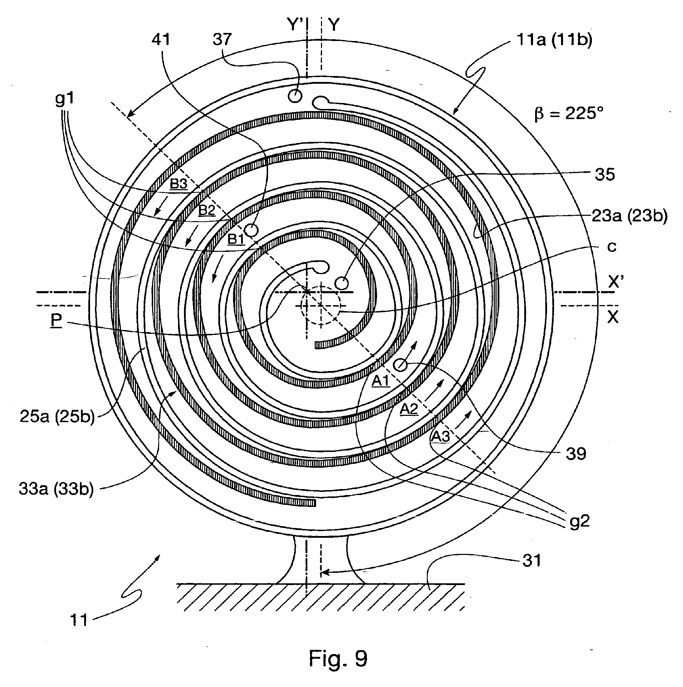

This ignition and combustion configuration is shown in Fig. 9. In such a configuration shown in Fig. 9, centre P is in the position corresponding to β = 225° along the circular path defined by circumference C.

In such a configuration, according to the orientation of Fig. 9, vertical axis Y' of the orbiting spiral is shifted to the left relative to vertical axis Y of the stationary spiral by an amount K/√2 and horizontal axis X' of the orbiting spiral is located at a distance K/√2 above axis X of the stationary spiral.

Other angular arrangements of injector 39 and ignition spark plug 41 are possible, as well as other angular positions for the occurrence of fuel injection and/or the mixture ignition and combustion, respectively.

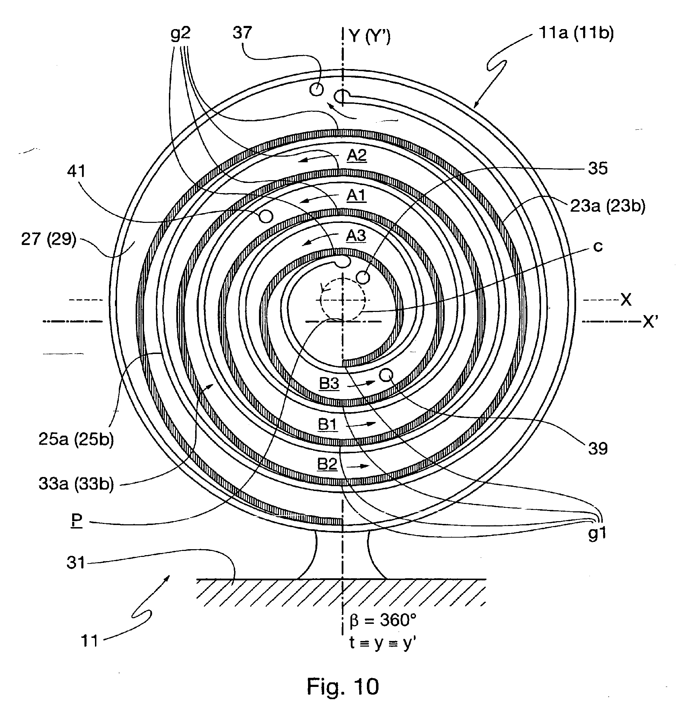

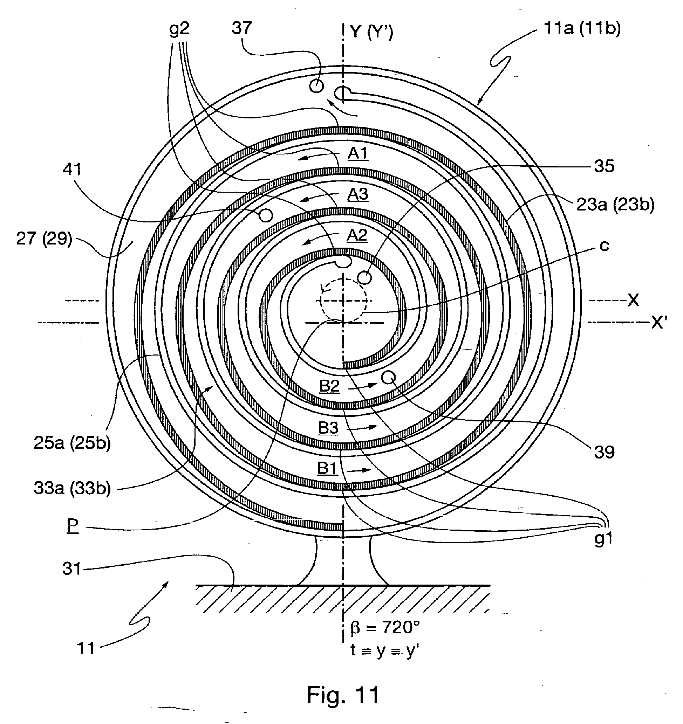

Referring to Figs. 10 to 12, there are shown as many angular configurations corresponding to the arrangements of chambers A1, A2, A3 and B1, B2, B3 taken when centre P is in the positions β = 360°, β = 720° and β = 900°, respectively, along the circular path defined by circumference C.

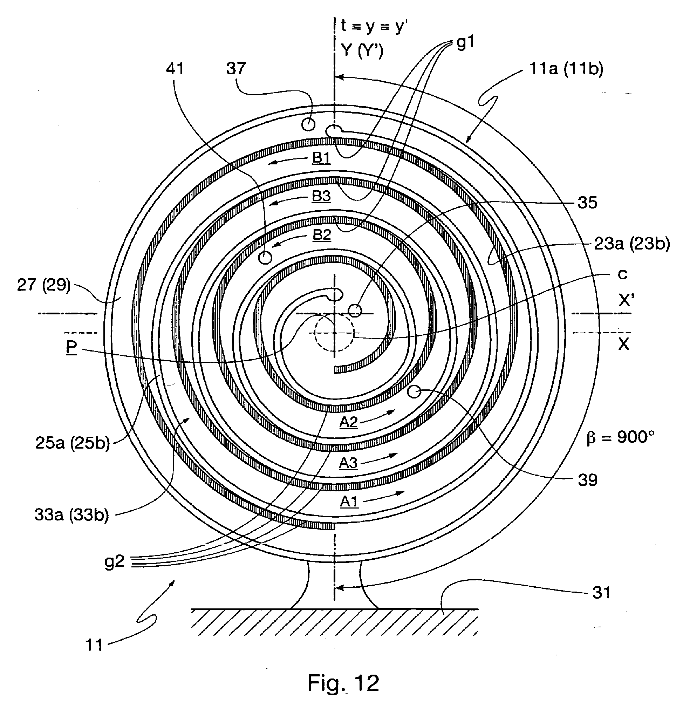

Referring to Fig. 12, it is clear that a further rotation of centre P by 180° along circumference C will bring chambers A1, A2, A3 and B1, B2, B3 into the same arrangement as that shown in Fig. 1, taken by the chambers at the beginning of the operation cycle. Consequently, the whole operation cycle develops over a path of about 1080°, corresponding to three full revolutions.

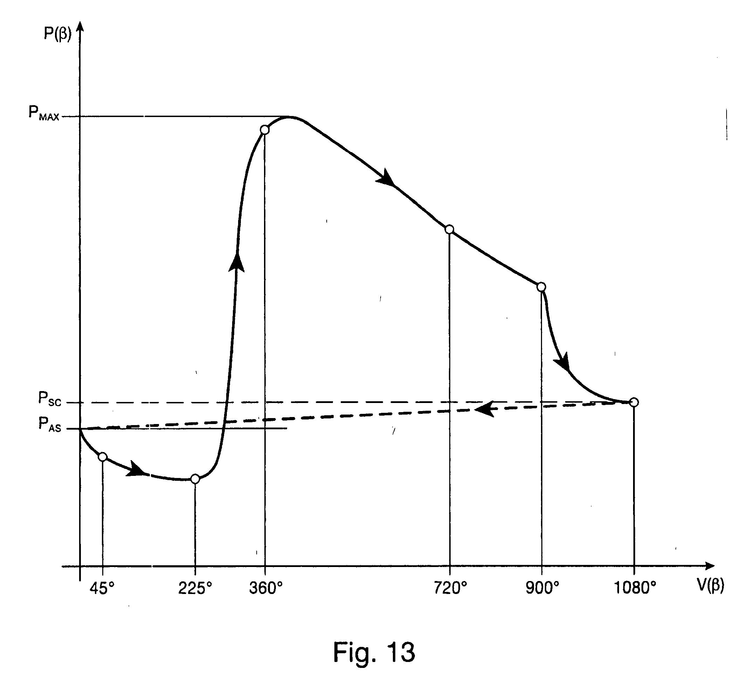

Turning now to Fig. 13, there is shown the graph of the pressure inside one of the six chambers defined along spiral channel 33a, 33b during the operation cycle of engine 11 according to the invention.

The graph of Fig. 13 shows a first phase in which the pressure inside the chamber slightly decreases below atmospheric pressure P_{AS} during the first 45° of the rotation of centre P along circumference C. That decrease is due to the fact that, because of the geometry of the spiral channel, the chamber volume increases during the path from the innermost to the outermost diameters.

Once fuel injection through injector 39 has occurred, the pressure further decreases, until the rotor reaches the position corresponding to β = 225°, where mixture ignition takes place (Fig. 9).

Mixture ignition causes the sudden pressure increase up to value P_{MAX} and the consequent orbiting movement of the moving spiral until the complete evacuation of combusted gas, which takes place at pressure P_{SC} substantially close to atmospheric intake pressure P_{AS}, after three revolutions of centre P along circumference C.

At the end of the described cycle, the chambers are again defined at the starting position shown in Fig. 1, the innermost chamber A1 being ready for a new cycle.

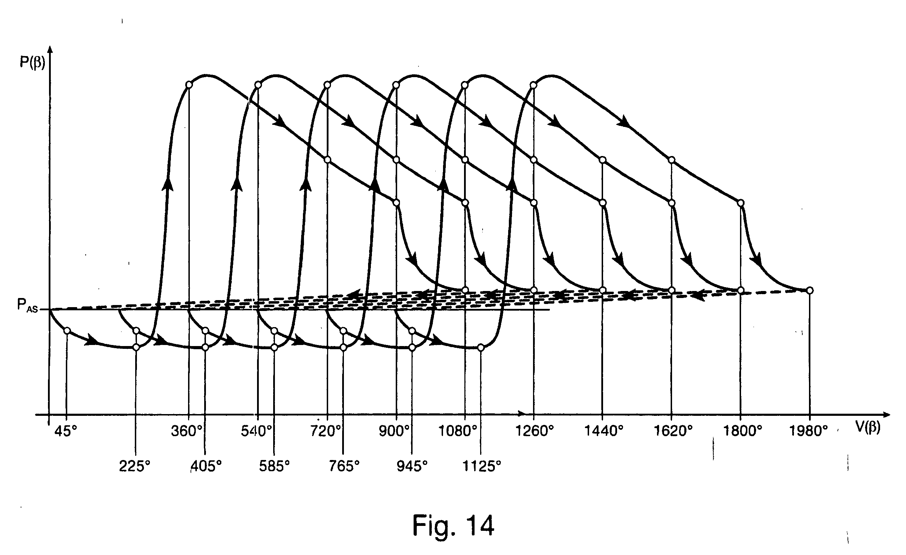

Since six chambers in the whole are defined in each rotor assembly, six operation cycles, phase shifted by 180°, will take place during the operation of the engine according to the invention, as shown in the graph of Fig. 14.

According to the invention, cooling of the engine can be obtained by air or a liquid.

Moreover, even if in the illustrated embodiment of the invention the spiral is an Archimedean spiral with four coils, other kinds of spirals, with a different spiral pitch and a different number of coils, can be envisaged, if within the scope of the appended claims.

## Claims

1. A scroll-type rotary engine, including a rotor assembly (11a, 11b) comprising a first spiral (25a, 25b) associated with a first disc (27, 29) and a second spiral (23a, 23b) associated with a second disc (15, 17), said first and second spirals (23a,23b,25a,25b) being interconnected one with the other and said second disc being eccentrically associated with a drive shaft (13) for transmitting the orbiting motion of the second spiral to a utilising apparatus,
- wherein said first disc (27, 29) and said first spiral are stationary and said second disc (15, 17) and said second spiral (23a, 23b) are orbiting according to a circular orbit eccentric relative to the centre of said first spiral, and wherein said stationary spiral (25a, 25b) defines, together with the stationary disc it is associated with, a corresponding spiral channel (33a, 33b) where said orbiting spiral (23a, 23b) orbits and where a mixture ignition and combustion region, is defined,
- wherein said orbiting spiral (23a, 23b) and said stationary spiral (25a, 25b) are sealingly engaged along generating lines (g1, g2) moving along the arc-shaped path defined by the stationary spiral during the orbiting movement of the orbiting spiral (23a, 23b), and wherein the orbiting spiral (23a, 23b) and the stationary spiral (25a, 25b) sealingly engage the stationary disc (27, 29) and the orbiting disc (15, 17), respectively, belonging to the same rotor assembly (11a, 11b), **characterized in that**
- two diametrically opposite sets of distinct work chambers are defined inside spiral channel (33a,33b) between said generating lines in correspondence of which the sealing is obtained, each set comprising three work chambers (A1, A2, A3, B1, B2, B3) defined by the sealing engagement between the stationary spiral (25a, 25b) and the orbiting spiral (23a, 23b) and by the sealing engagement between the stationary and orbiting spirals and the corresponding discs (15, 17) said spirals are associated with, whereby said chambers are axially bounded by the seals provided between the spirals and the discs, and are angularly defined by the seals defined along said generating lines (g1, g2) of the spirals,
- an inlet port (35) and an outlet port (37) are further provided along said spiral channel (33a, 33b), for the inlet of air or the combustible mixture at the beginning of the operation cycle of the engine and for exhausting the combusted gases at the end of said cycle, respectively, said operation cycle developing over a path of about 1080°, corresponding to three full revolutions whereby six operation cycles, phase shifted by 180°, take place during the operation of the engine,
- a fuel injection region, equipped with an injector (39), and an ignition and combustion region, equipped with an ignition spark plug (41), are defined along said spiral channel (33a, 33b), and **in that**
- such chambers evolve along the spiral path during the operation cycle of the engine whereby injection and mixture ignition occur within a corresponding one of said chambers when said chambers reach the injection and ignition region respectively.

2. The engine as claimed in claim 1, wherein several ignition means are provided along the path defined between the engine portion with the smallest radius and the portion with the greatest radius whereby the ignition of the mixture and of the partly combusted gases is repeated several times along said path.

3. The engine as claimed in claim 1, wherein said orbiting and stationary spirals are four-coil Archimedean spirals.

4. The engine as claimed in claim 2, wherein said injector (39) and said ignition spark plug (41) are substantially diametrically opposite.

5. The engine as claimed in claim 3, wherein said stationary disc (27, 29) with which the stationary spiral is associated has a first axial hole (43) where a corresponding threaded seat for said injector (39) is formed, and a second axial hole (45) where a corresponding threaded seat for said ignition spark plug (41) is formed.

6. The engine as claimed in claim 1, wherein the wall defining the stationary and orbiting spirals has a substantially frusto-conical cross-sectional shape and wherein a sliding seal is obtained, where sealing gaskets or inserts (47) are inserted into seats provided both on edge (49) of the stationary spiral and on edge (48) of the moving spiral, so as to prevent the gas expanding inside spiral channel (33a, 33b) from radially transiting along the spirals, with a resulting degradation of the engine performance.

7. The engine as claimed in claim 1, wherein said orbiting disc is associated with said drive shaft (13) by means of a coupling flange (21) equipped with bearings (19) and secured to said shaft (13).

8. The engine as claimed in claim 1, wherein said engine includes two rotor assemblies associated with the same drive shaft (13).

9. The engine as claimed in claim 1, wherein the geometry of the spiral channel is such that the chamber volume increases during the path from the innermost to the outermost diameters, whereby the mixture entering the engine can be at a pressure close to atmospheric pressure and it will not suffer from overheating and overpressure due to its compression.

10. The engine as claimed in claim 1, wherein ignition takes place at multiple points by means of a ignition system that uses the stationary spiral as an anode and the moving spiral as a cathode, and that includes, along the gas expansion path, conductive plates formed on both spirals at facing positions.

11. The engine as claimed in claim 9, wherein stationary spiral (25a, 25b) is equipped with at least one conducting plate (61) which increases conductivity with respect to the remaining spiral surface.

12. The engine as claimed in claim 10, wherein said plates are obtained by means of a platinum coating or of an electrode inserted into the spiral.

13. The engine as claimed in claim 10, wherein a plurality of ignition plates (61) are provided, thereby obtaining a sequence of consecutive ignitions at closely spaced time intervals, thereby favouring the complete mixture combustion.

14. The engine as claimed in claim 1, wherein the seal between moving spiral (23a, 23b) and the plane surface of stationary disc (27, 29) is formed by a sliding gasket (47) associated with the surface of edge (48) of moving spiral (23a, 23b), said sealing gasket or insert (47) being formed of a solid lubricating material resisting to high temperatures.

15. A method of operating a scroll-type rotary engine as claimed in any claim 1 to 14, wherein fuel injection and fuel ignition and combustion take place in corresponding distinct regions equipped with an injector (39) and an ignition spark plug (41), respectively.

## Patentansprüche

1. Rotationsmotor vom Scroll-Typ, beinhaltend eine Rotorbaugruppe (11a, 11b), die eine einer ersten Scheibe (27, 29) zugehörige erste Spirale (25a, 25b) und eine einer zweiten Scheibe (15, 17) zugehörige zweite Spirale (23a, 23b) aufweist, wobei die erste und die zweite Spirale (23a, 23b, 25a, 25b) miteinander verbunden sind und die zweite Scheibe exzentrisch mit einer Antriebswelle (13) zum Übertragen der kreisenden Bewegung der zweiten Spirale auf ein Nutzungsgerät verbunden ist,
- wobei die erste Scheibe (27, 29) und die erste Spirale stationär sind und die zweite Scheibe (15, 17) und die zweite Spirale (23a, 23b) gemäß einer kreisförmigen Umkreisungsbewegung kreisen, die exzentrisch relativ zum Mittelpunkt der ersten Spirale ist, und wobei die stationäre Spirale (25a, 25b), gemeinsam mit der stationären Scheibe, der sie zugehörig ist, einen entsprechenden Spiralkanal (33a, 33b) definiert, in dem die kreisende Spirale (23a, 23b) kreist und in dem ein Gemischzündungs- und -verbrennungsgebiet definiert ist,
- wobei die kreisende Spirale (23a, 23b) und die stationäre Spirale (25a, 25b) entlang Erzeugenden (g1, g2) abdichtend in Eingriff sind, die sich entlang dem bogenförmigen Weg, der durch die stationäre Spirale definiert ist, während der kreisenden Bewegung der kreisenden Spirale (23a, 23b) bewegen, und wobei die kreisende Spirale (23a, 23b) und die stationäre Spirale (25a, 25b) mit der stationären Scheibe (27, 29) bzw. der kreisenden Scheibe (15, 17), die zu derselben Rotorbaugruppe (11a, 11b) gehören, abdichtend in Eingriff sind, **dadurch gekennzeichnet, dass**
- zwei diametral gegenüberliegende Sätze von verschiedenen Arbeitskammern innerhalb des Spiralkanals (33a, 33b) zwischen den Erzeugenden, in Übereinstimmung zu denen die Abdichtung erzielt wird, definiert sind, wobei jeder Satz drei Arbeitskammern (A1, A2, A3, B1, B2, B3) aufweist, die durch den Abdichtungseingriff zwischen der stationären Spirale (25a, 25b) und der kreisenden Spirale (23a, 23b) und durch den Abdichtungseingriff zwischen der stationären und der kreisenden Spirale und den entsprechenden Scheiben (15, 17), denen diese Spiralen zugehörig sind, definiert sind, wodurch die Kammern in axialer Richtung durch die Dichtungen begrenzt werden, die zwischen den Spiralen und den Scheiben vorgesehen sind, und betreffend die Winkelrichtung durch die Abdichtungen begrenzt werden, die entlang den Erzeugenden (g1, g2) der Spiralen definiert sind,
- eine Einlassöffnung (35) und eine Auslassöffnung (37) weiter entlang dem Spiralkanal (33a, 33b) vorgesehen sind, und zwar für den Einlass von Luft oder des Brennstoffgemisches zu Beginn des Arbeitszyklus des Motors bzw. zum Ausstoßen der verbrannten Gase am Ende dieses Zyklus, wobei der Arbeitszyklus sich über einen Weg von ca. 1080° entwickelt, entsprechend drei vollständigen Umdrehungen, wodurch sechs Arbeitszyklen, um 180° phasenverschoben, während des Betriebs des Motors stattfinden,
- ein Brennstoffeinspritzgebiet, das mit einer Einspritzeinrichtung (39) ausgerüstet ist, und ein Zündungs- und Verbrennungsgebiet, das mit einer Zündkerze (41) ausgerüstet ist, entlang dem Spiralkanal (33a, 33b) definiert sind, und dadurch, dass
- diese Kammern entlang dem spiralförmigen Weg während des Arbeitszyklus des Motors entstehen, wodurch Einspritzung und Gemischzündung innerhalb einer entsprechenden von den Kammern erfolgen, wenn die Kammern das Einspritz- bzw. Zündgebiet erreichen.

2. Motor nach Anspruch 1, wobei mehrere Zündeinrichtungen entlang dem Weg vorgesehen sind, der zwischen dem Motorabschnitt mit dem kleinsten Radius und dem Abschnitt mit dem größten Radius definiert ist, wodurch die Zündung des Gemisches und der teilweise verbrannten Gase mehrere Male entlang des Weges wiederholt wird.

3. Motor nach Anspruch 1, wobei die kreisende und die stationäre Spirale viergängige archimedische Spiralen sind.

4. Motor nach Anspruch 2, wobei die Zündeinrichtung (39) und die Zündkerze (41) im Wesentlichen diametral gegenüberliegend angeordnet sind.

5. Motor nach Anspruch 3, wobei die stationäre Scheibe (27, 29), der die stationäre Spirale zugehörig ist, ein erstes axiales Loch (43), in dem ein entsprechender mit Gewinde versehener Sitz für die Einspritzeinrichtung (39) ausgebildet ist, und ein zweites axiales Loch (45) aufweist, in dem ein entsprechender mit Gewinde versehener Sitz für die Zündkerze (41) ausgebildet ist.

6. Motor nach Anspruch 1, wobei die Wand, welche die stationäre und die kreisende Spirale begrenzt, einen im Wesentlichen kegelstumpfförmigen Querschnitt hat, und wobei eine gleitende Abdichtung erzielt wird, wobei Dichtungen oder Dichteinsätze (47) in Sitze eingesetzt sind, die sowohl auf der Kante (49) der stationären Spirale als auch auf der Kante (48) der beweglichen Spirale vorgesehen sind, so dass verhindert wird, dass Gas, das im Inneren des Spiralkanals (33a, 33b) expandiert, in radialer Richtung entlang der Spiralen übergeht, mit einer daraus resultierenden Beeinträchtigung der Motorleistung.

7. Motor nach Anspruch 1, wobei die kreisende Scheibe mit der Antriebswelle (13) mittels eines Kopplungsflansches (21) verbunden ist, der mit Lagern (19) ausgerüstet ist und an der Welle (13) befestigt ist.

8. Motor nach Anspruch 1, wobei der Motor zwei Rotorbaugruppen beinhaltet, die mit derselben Antriebswelle (13) verbunden sind.

9. Motor nach Anspruch 1, wobei die Geometrie des Spiralkanals derart ist, dass das Kammervolumen während des Weges von dem ganz innen befindlichen zu dem ganz außen befindlichen Durchmesser zunimmt, wodurch das Gemisch, das in den Motor eintritt, auf einem Druck nahe Atmosphärendruck sein kann und bedingt durch sein Komprimieren kein Überhitzen oder Überdruck erleidet.

10. Motor nach Anspruch 1, wobei die Zündung bei mehreren Punkten mittels eines Zündungssystems erfolgt, das die stationäre Spirale als Anode und die bewegliche Spirale als Kathode verwendet und das, entlang dem Gasexpansionsweg, leitende Platten beinhaltet, die an beiden Spiralen bei zugewandten Positionen ausgebildet sind.

11. Motor nach Anspruch 9, wobei die stationäre Spirale (25a, 25b) mit mindestens einer leitenden Platte (61) ausgerüstet ist, welche die Leitfähigkeit bezüglich der verbleibenden Spiralfläche vergrößert.

12. Motor nach Anspruch 10, wobei die Platten mittels einer Platinbeschichtung oder einer in die Spirale eingesetzten Elektrode erzielt werden.

13. Motor nach Anspruch 10, wobei eine Mehrzahl von Zündungsplatten (61) vorgesehen sind, wodurch eine Abfolge von aufeinanderfolgenden Zündungen bei in engem Abstand befindlichen Zeitintervallen erzielt wird, wodurch die vollständige Verbrennung des Gemisches begünstigt wird.

14. Motor nach Anspruch 1, wobei die Abdichtung zwischen der beweglichen Spirale (23a, 23b) und der ebenen Fläche der stationären Scheibe (27, 29) durch eine Gleitdichtung (47) ausgebildet ist, die der Oberfläche der Kante (48) der beweglichen Spirale (23a, 23b) zugehörig ist, wobei die Dichtung oder der Dichteinsatz (47) aus einem festen schmierenden Material ausgebildet ist, das hochtemperaturbeständig ist.

15. Verfahren zum Betreiben eines Rotationsmotors vom Scroll-Typ nach einem der Ansprüche 1 bis 14, wobei eine Kraftstoffeinspritzung und eine Kraftstoffzündung und - verbrennung in entsprechenden verschiedenen Gebieten erfolgen, die mit einer Einspritzeinrichtung (39) bzw. einer Zündkerze (41) ausgerüstet sind.

## Revendications

1. Moteur rotatif de type spirale, incluant un ensemble rotor (11a, 11 b) comprenant une première spirale (25a, 25b) associée à un premier disque (27, 29) et une seconde spirale (23a, 23b) associée avec un second disque (15, 17), lesdites première et seconde spirales (23a, 23b, 25a, 25b) étant reliées l'une à l'autre et ledit second disque étant associé de manière excentrique avec un arbre de transmission (13) pour transmettre le mouvement orbital de la seconde spirale à un appareil d'utilisation,
- dans lequel ledit premier disque (27, 29) et ladite première spirale sont stationnaires et ledit second disque (15, 17) et ladite seconde spirale (23a, 23b) sont en mouvement orbital selon une orbite circulaire excentrique par rapport au centre de ladite première spirale, et dans lequel ladite spirale stationnaire (25a, 25b) décrit, avec le disque stationnaire auquel elle est associée, un canal en spirale correspondant (33a, 33b) où ladite spirale orbitale (23a, 23b) est en mouvement orbital et où une zone d'allumage et de combustion d'un mélange est définie,
- dans lequel ladite spirale orbitale (23a, 23b) et ladite spirale stationnaire (25a, 25b) sont en contact de façon étanche dans des lignes de génération (g1, g2) se déplaçant dans un trajet en forme d'arc défini par la spirale stationnaire durant le mouvement orbital de la spirale orbitale (23a, 23b), et dans lequel la spirale orbitale (23a, 23b) et la spirale stationnaire (25a, 25b) sont respectivement en contact avec le disque stationnaire (27, 29) et le disque orbital (15, 17), faisant partie du même ensemble rotor (11 a, 11 b), **caractérisé en ce que**
- deux ensembles diamétralement opposés de chambres de travail distinctes sont définis à l'intérieur du canal en spirale (33a, 33b) entre lesdites lignes de génération en correspondance desquelles l'étanchéité est obtenue, chaque ensemble comprenant trois chambres de travail (A1, A2, A3, B1, B2, B3) définies par le contact étanche entre la spirale stationnaire (25a, 25b) et la spirale orbitale (23a, 23b) et par le contact étanche entre les spirales stationnaire et orbitale et les disques correspondants (15, 17) auxquels lesdites spirales sont associées, par lesquels lesdites chambres sont délimitées axialement par les joints disposés entre les spirales et les disques, et forment un angle avec les joints définis dans lesdites lignes de génération (g1, g2) des spirales,
- un orifice d'admission (35) et un orifice de sortie (37) sont en outre prévus dans le canal en spirale (33a, 33b), permettant respectivement l'admission d'air ou du mélange combustible au début du cycle de fonctionnement du moteur et permettant l'échappement des gaz brûlés à la fin dudit cycle, ledit cycle de fonctionnement se déroulant sur un trajet d'environ 1 080o, correspondant à trois révolutions complètes par lesquelles six cycles de fonctionnement, déphasés de 180o, ont lieu lors du fonctionnement du moteur,
- une zone d'injection de carburant, pourvue d'un injecteur (39), et une zone d'allumage et de combustion, pourvue d'une bougie d'allumage (41), sont définies dans ledit canal en spirale (33a, 33b), et **en ce que**
- ces chambres évoluent dans le trajet en spirale au cours du cycle de fonctionnement du moteur par lequel l'injection et l'allumage du mélange se produisent dans une chambre correspondante desdites chambres lorsque lesdites chambres atteignent respectivement la zone d'injection et d'allumage.

2. Moteur selon la revendication 1, dans lequel plusieurs moyens d'allumage sont prévus au cours du trajet défini entre la partie du moteur avec le plus petit rayon et la partie du moteur avec le plus grand rayon par lesquels l'allumage du mélange et des gaz partiellement brûlés est renouvelé plusieurs fois au cours dudit trajet.

3. Moteur selon la revendication 1, dans lequel lesdites spirales orbitale et stationnaire sont des spirales d'Archimède à quatre spires.

4. Moteur selon la revendication 2, dans lequel ledit injecteur (39) et ladite bougie d'allumage (41) sont sensiblement diamétralement opposés.

5. Moteur selon la revendication 3, dans lequel ledit disque stationnaire (27, 29) auquel la spirale stationnaire est associée comporte un premier orifice axial (43) dans lequel est formé un siège fileté correspondant pour ledit injecteur (39), et un second orifice axial (45) dans lequel est formé un siège fileté correspondant pour ladite bougie d'allumage (41).

6. Moteur selon la revendication 1, dans lequel la paroi définissant les spirales stationnaire et orbitale a sensiblement une forme de section transversale tronconique et dans lequel est obtenue une étanchéité coulissante, où les joints ou éléments d'étanchéité (47) sont insérés dans des sièges prévus à la fois sur le bord (49) de la spirale stationnaire et sur le bord (48) de la spirale en mouvement, de façon à empêcher le gaz qui se propage dans le canal en spirale (33a, 33b) de transiter radialement dans les spirales, avec pour conséquence une dégradation des performances du moteur.

7. Moteur selon la revendication 1, dans lequel ledit disque orbital est associé avec ledit arbre de transmission (13) au moyen d'une bride d'accouplement (21) pourvue de paliers (19) et solidaire dudit arbre (13).

8. Moteur selon la revendication 1, dans lequel ledit moteur comprend deux ensembles rotor associés au même arbre de transmission (13).

9. Moteur selon la revendication 1, dans lequel la géométrie du canal en spirale est telle que le volume de la chambre augmente au cours du trajet depuis le diamètre le plus à l'intérieur vers le diamètre le plus à l'extérieur, par lequel le mélange admis dans le moteur peut être à une pression proche de la pression atmosphérique et ne subira pas de surchauffe ni de surpression en raison de sa compression.

10. Moteur selon la revendication 1, dans lequel l'allumage se produit à des points multiples au moyen d'un système d'allumage qui utilise la spirale stationnaire comme une anode et la spirale en mouvement comme une cathode, et qui comprend, dans le trajet d'expansion du gaz, des plaques conductrices disposées sur les deux spirales les unes face aux autres.

11. Moteur selon la revendication 9, dans lequel la spirale stationnaire (25a, 25b) est pourvue d'au moins une plaque conductrice (61) qui augmente la conductivité par rapport à la surface restante de la spirale.

12. Moteur selon la revendication 10, dans lequel lesdites plaques sont obtenues au moyen d'un revêtement en platine ou d'une électrode insérée dans la spirale.

13. Moteur selon la revendication 10, dans lequel une pluralité de plaques d'allumage (61) sont prévues, obtenant ainsi une séquence d'allumages consécutifs à des intervalles de temps rapprochés, favorisant ainsi la combustion complète du mélange.

14. Moteur selon la revendication 1, dans lequel l'étanchéité entre la spirale en mouvement (23a, 23b) et la surface plane du disque stationnaire (27, 29) est formée par un joint coulissant (47) associé à la surface du bord (48) de la spirale en mouvement (23a, 23b), ledit joint ou élément d'étanchéité (47) étant constitué d'une matière lubrifiante solide résistant aux hautes températures.

15. Procédé de fonctionnement d'un moteur rotatif à spirales selon l'une quelconque des revendications 1 à 14, dans lequel l'injection du carburant et l'allumage et la combustion du carburant ont lieu dans des zones correspondantes distinctes pourvues respectivement d'un injecteur (39) et d'une bougie d'allumage (41).
